(19) Europäisches Patentamt
European Patent Office
Office européen des brevets

(11) Veröffentlichungsnummer : **0 024 501**
**B1**

(12) # EUROPÄISCHE PATENTSCHRIFT

(45) Veröffentlichungstag der Patentschrift : **11.08.82**

(21) Anmeldenummer : **80103616.1**

(22) Anmeldetag : **26.06.80**

(51) Int. Cl.³ : **C 09 K 3/10**, C 08 L 75/08, C 08 K 5/17, C 08 K 5/29, C 08 K 5/54

(54) **Zweikomponenten-Polyurethan-Dichtmassen und ihre Verwendung.**

(30) Priorität : **13.08.79 AT 5498/79**

(43) Veröffentlichungstag der Anmeldung : **11.03.81 (Patentblatt 81/10)**

(45) Bekanntmachung des Hinweises auf die Patenterteilung : **11.08.82 Patentblatt 82/32**

(84) Benannte Vertragsstaaten : **BE CH DE FR GB IT LI NL SE**

(56) Entgegenhaltungen : **US A 4 063 002**

(73) Patentinhaber : **Teroson GmbH**
**Hans-Bunte-Strasse 4**
**D-6900 Heidelberg 1 (DE)**

(72) Erfinder : **Schwebel, Georg**
**Uhlandstrasse 14**
**D-6901 Eppelheim (DE)**
Erfinder : **Rocholl, Martin, Dr.**
**Scheffelstrasse 8**
**D-6900 Heidelberg 1 (DE)**
Erfinder : **Schätzle, Michael**
**Kleegartenstrasse 22**
**D-6902 Sandhausen (DE)**

(74) Vertreter : **UEXKÜLL & STOLBERG Patentanwälte**
**Beselerstrasse 4**
**D-2000 Hamburg 52 (DE)**

**EP 0 024 501 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Zweikomponenten-Polyurethan-Dichtmassen und ihre Verwendung

Die Erfindung betrifft lagerstabile, lösemittelarme bis lösemittelfreie Zweikomponenten-Polyurethan-Dichtmassen mit vorzüglichem Fogverhalten, die auf Glas und auf Aluminium sehr gut haften.

Haftende Dichtungsmassen der hier in Rede stehenden Art werden u.a. als Haftdichtstoffe bei der Herstellung von Isolierglas sowie zum Vergließen von Isolierglaseinheiten in Aluminiumrahmen benötigt. Zweikomponenten-Polyurethanmassen waren für derartige Zwecke bisher allerdings nicht geeignet.

In der US-A 4 063 002 werden neben gehärteten Polyethern auch weichmacherhaltige gehärtete Polyurethanmassen als Dichtmassen für die Herstellung von Isolierglas beschrieben. Dabei kann die Polyurethankomponente aus einem gehärteten Prepolymer mit freien Isocyanatgruppen bestehen. Besondere Bedeutung wir in der US-PS 4 063 002 der Weichmacherkomponente beigemessen, während die übrigen Komponenten und insbesondere der Härter nur am Rande in ganz allgemeiner Form erwähnt werden. Die beschriebenen Dichtungsmassen sind offensichtlich nur für sofortige Verarbeitung geeignet. In Spalte 12, Zeilen 12 bis 27 wird zwar erwähnt, daß die Dichtungsmassen auch als 2-Komponenten-Dichtmassen verwendet werden können, wobei allerdings auf Schwierigkeiten hinsichtlich der Lagerstabilität hingewiesen und eine Trocknung der Prepolymerkomponente empfohlen wird. Darüber hinaus enthält die Weichmacherkomponente vorzugsweise Teer- und Asphaltprodukte, die verschiedene Nachteile mit sich bringen, da sie einen Schmelzvorgang erfordern, die Farbwahl des Endprodukts beeinflussen und aufgrund ihrer Härte zur Versprödung and zu verschlechterter Kälteflexibilität der Dichtmassen bei tiefen Temperaturen von z.B. – 20 °C führen.

Demgegenüber wurde nun gefunden, daß man bei Verwendung ganz bestimmter ausgewählter Bestandteile zu 2K-Polyurethanmassen gelangt, die sich ausgezeichnet für die Herstellung von Isolierglas sowie das Vergießen von Isolierglasscheiben in Aluminiumrahmen eignen und weitgehend fogfreie, hervorragend haftende, lösemittelfreie Massen darstellen.

Gegenstand der Erfindung sind dementsprechend 2K-Polyurethan-Dichtmassen der in den Ansprüchen gekennzeichneten Art.

Durch Wahl geeigneter Zusätze, insbesondere geeigneter Füllstoffe und durch Veränderung der Mengenanteile der erfindungsgemäß vorhandenen Bestandteile, insbesondere des Polymer- und Epoxidharzgehalts können die erfindungsgemäßen Dichtmassen verschiedenen Verwendungszwecken angepaßt werden. So verzichtet man im allgemeinen bei Vergußmassen, die sich für das sogenannte Vergießen von Isolierglaseinheiten in Aluminiumrahmen eignen, auf ein Thixotropiemittel und erhält so gießfähige Dichtmassen. Demgegenüber gelangt man durch Zusatz eines Thixotropiemittels und gegebenenfalls eines Epoxidharzes zu mehr oder weniger standfesten Dichtmassen, die sich insbesondere für die Herstellung von Isolierglas eignen, da sie lösemittelfrei sind, eine sehr gute Glas- und Aluminiumhaftung aufweisen, niedrige Wasserdampfdiffusionswerte besitzen und im Fogtest keinen Beschlag geben. Die Härtung dieser Dichtmassen verläuft sehr rasch und führt nach einigen Stunden zu klebfreien Massen.

Die erfindungsgemäßen Dichtmassen eignen sich aber auch für Bauzwecke und industrielle Anwendungen, wo aus technischen oder aus kommerziellen Gründen andere Zweikomponentenmassen (PS, Epoxid, Silan, Polyacrylat) nicht einsetzbar sind. Erfindungsgemäße Dichtmassen für Bauzwecke enthalten gegenüber den zuvor genannten Zusammensetzungen meist höhere Anteile an Thixotropiemittel, Epoxidharz und Weichmacher. Ihre Verarbeitungszeit liegt im Bereich von 1 bis 3 Stunden und vorzugsweise 1 bis 1 1/2 Stunden, während die Verarbeitungszeiten der für die Herstellung von Isolierglas geeigneten Dichtmassen und der als Vergußmassen einsetzbaren Dichtmassen im Bereich von 10 bis 45 Minuten und insbesondere 20 bis 30 Minuten liegen.

Bei den erfindungsgemäßen Zweikomponenten-Polyurethan-Dichtmassen enthält die eine Komponente lineare und/oder verzweigte Polymere mit Ether- und Urethangruppen sowie vernetzungsfähigen, blockierten Isocyanatgruppen, Epoxidharz, Weichmacher, Silan und gegebenenfalls Thixotropiemittel, während die andere Komponente den Härter zusammen mit einem Beschleuniger enthält. Es ist jedoch auch möglich, daß die zweite Komponente etwas Weichmacher, Silan und gegebenenfalls Thixotropiemittel enthält. Erfindungsgemäß werden die beiden Komponenten in einem Verhältnis von etwa 2 : 1 bis 100 : 1 und vorzugsweise 5 : 1 bis 20 : 1 zusammengegeben und aushärten gelassen, wobei das im Anspruch 1 angegebene Gewichtsverhältnis von Polymeren mit Ether- und Urethangruppen sowie vernetzungsfähigen, blockierten Isocyanatgruppen und Epoxidharz zu Härter von 10 : 1 bis 40 : 1 und vorzugsweise 15 : 1 bis 30 : 1 einzuhalten ist.

Erfindungsgemäß geeignete lineare und verzweigte Polymere mit Ether- und Urethangruppen sowie vernetzungsfähigen, blockierten Isocyanatgruppen sind Polyether-TDI-Prepolymere mit Ether- und Urethangruppen sowie blockierten Isocyanatgruppen, die durch Phenole und insbesondere Nonylphenol blockiert sind. Derartige Polymere sind im Handel beispielsweise unter den Bezeichnungen « Desmocap 11 », « Desmocap 1180 » und « Desmocap 1280 » (Bayer) erhältlich. « Desmocap 11 » ist ein verzweigtes Polymer mit Ether- und Urethangruppen, das 2,4 % vernetzungsfähige, blockierte NCO-Gruppen enthält und eine Viskosität von ungefähr 800 P (80 Pa.s) sowie ein spezifisches Gewicht von 1,05 g/cm³ besitzt. Der Flammpunkt liegt bei 211 °C. Als Blockierungsmittel dienen Phenole und insbesondere Nonylphenol in einer Menge von etwa 4 bis 6 %. Ein entsprechendes Produkt ist « Desmocap 1180 », das sich von

« Desmocap 11 » dadurch unterscheidet, daß es zusätzlich 20 % Trioctylphosphat zur Herabsetzung der Viskosität enthält.

Demgegenüber ist « Desmocap 1280 » ein lineares Polymer mit Ether- und Urethangruppen, das 1,4 % vernetzungsfähige, blockierte Isocyanatgruppen enthält und eine Viskosität von etwa 23 P (2,3 Pa.s) sowie ein spezifisches Gewicht von 1,03 besitzt. Der Flammpunkt liegt über 200 °C. Darüber hinaus enthält « Desmocap 1280 » genau wie « Desmocap 1180 » 20 % Trioctylphosphat.

Der Anteil dieser linearen und/oder verzweigten Polymere mit Ehter- und Urethangruppen in der ersten Komponente beträgt etwa 10 bis 50 Gew.% und vorzugsweise 15 bis 30 Gew.%.

Neben den Polymeren mit Ether- und Urethangruppen sowie vernetzungsfähigen, blockierten Isocyanatgruppen enthalten die erfindungsgemäßen Dichtmassen bezogen auf die erste Komponente 0 bis 15 Gew.% Epoxidharze. Diese sind besonders bei Verwendung der erfindungsgemäßen Dichtmassen als Isolierglasdichtstoffe erwünscht, da sie die Wasserdampfdiffusion erheblich verringern. Vorzugsweise liegt ihr Anteil in der ersten Komponente bei 2 bis 10 Gew.% und insbesondere 3 bis 8 Gew.%.

Für die erfindungsgemäßen Zwecke geeignete Epoxidharz sind solche auf Epichlorhydrin-Diphenylolpropan-Basis mit Epoxidwerten von z.B. 0,5. Derartige Epoxidharze sind im Handel von einer Vielzahl von Herstellern erhältlich und werden beispielsweise unter den Bezeichnungen GfT 0164 (Rütgers), Araldite GY 250 (Ciba-Geigy), Beckopox 37139 (Reihhold-Albert) usw. vertrieben. Geeignet sind insbesondere Produkte mit einer Viskosität bei 25 °C von 50 bis 150 P (5-15 Pa.s), einem Epoxidwert von 0,50 bis 0,55 und einem spezifischen Gewicht von 1,15 bis 1,18.

Gute Ergebnisse werden auch bei Verwendung von Epoxidharzen erhalten, die aliphatische Polyglycidylether darstellen und Epoxidwerte von beispielsweise 0,7 besitzen. Als Beispiel sei Epikote 160 (Shell) genannt, das eine Viskosität von ca. 170 P (17 Pa.s) bei 25 °C hat und dessen spezifisches Gewicht bei 1,11 liegt. Dieses Epoxidharz erniedrigt durch seine geringe Viskosität die Viskosität der Mischung in vorteilhafter Weise.

Das in den erfindungsgemäßen Dichtmassen bezogen auf die erste Komponenten in einer Menge von 0,1 bis 2,5 Gew.% und vorzugsweise 0,4 bis 0,8 Gew.% enthaltene Silan dient im wesentlichen als Haftvermittler. Als besonders geeignet hat sich das Trialkoxylisan γ-Glycidoxypropyltrimethoxysilan (spezifisches Gewicht 1,069 ; Molekulargewicht 236,1) mit der Formel

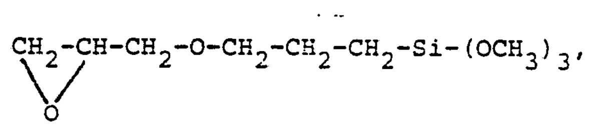

erwiesen, das als vierten Substituenten am Silicium einen organischen Rest mit einer Epoxidgruppe enthält. Dieses Silan ist im Handel unter anderem unter der Bezeichnung « Silan A 187 » (UCC) oder « GLYMO » (Dynamit-Nobel) erhältlich. Weitere geeignete Silane sind N-β(aminoethyl-γ-aminopropyltrimethoxysilan mit der Formel

$$H_2—N—CH_2—CH_2—NH—CH_2—CH_2—CH_2—Si(OCH_3)_3,$$

das im Handel unter der Bezeichnung « DAMO » (Dynamit-Nobel) erhältlich ist, N-(β-ethylänädiaminoethyl)-γ-aminopropyltrimethoxysilan mit der Formel

$$H_2N—(CH_2)_2—NH—(CH_2)_2—NH—(CH_2)_3—Si—(OCH_3)_3,$$

das im Handel unter der Bezeichnung « Triamo » (Dynamit-Nobel) erhältlich ist, γ-Aminopropyl-trimethoxysilan mit der Formel $H_2N—CH_2—CH_2\text{-}CH_2—Si(OCH_3)_3$, das im Handel unter der Bezeichnung « Ammo » (Dynamit-Nobel) erhältlich ist, N-methyl-γ-aminopropyl-trimethoxysilan mit der Formel

$$CH_3—NH—CH_2—CH_2—CH_2—Si—(OCH_3)_3,$$

das im Handel unter der Bezeichnung « Dynasilan 1110 E » (Dynamit-Nobel) erhältlich ist, und Vinyltrimethoxysilan mit der Formel

$$CH_2 = CH—Si—(OCH_3)_3,$$

das im Handel unter der Bezeichnung « Silan A 171 » (« UCC ») erhältlich ist. Sehr gute Ergebnisse werden auch mit Kombinationen dieser Silane erzielt, z.B. bei Verwendung von « Silan A 171 », « DAMO » und « Triamo » in Mengen von jeweils 0,2 % oder in Mengen von 1,8 %, 0,2 % und 0,2 % (bezogen auf die erste Komponente).

Als besonders gut geeigneter Weichmacher für die erfindungsgemäßen Dichtmassen hat sich Diisodecylphthalat (DIDP) herausgestellt. Gute Ergebnisse können jedoch auch mit Santicizer 278 (UCC) und Witamol 600 (Dynamit-Nobel) erzielt werden. Hierbei handelt es sich um Iso-octylenglykol-butyratmono-benzylphthalat mit der Formel

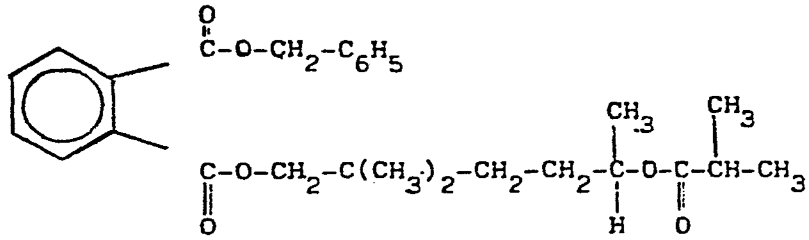

bzw. um einen niedermolekularen Polymer-Weichmacher (d = 1,06 ; Viskosität : 500 cP (50 c.P.s.) ; Säurezahl = 0). Darüber hinaus sind auch Polybutene sowie gegebenenfalls reaktive, flüssige Polybutadiene, wie Poly-bd-R 45 HT (Metallgesellschaft) einsetzbar. Letzteres ist ein Butadienhomopolymer mit einem mittleren Molekulargewicht von 2 800, einer Funktionalität von 2,2 bis 2,4, einer Viskosität (Pas) bei 30 °C von 5, 0, einer Dichte bei 30 °C von 0,901, einer OH-Zahl (mg KOH/g) von 46,6 und einer Jodzahl von 398. Die endständigen, primären Hydroxylgruppen sind zu 95 % allylisch angeordnet.

Der bevorzugte Weichmacher ist jedoch Diisodecylphthalat, da dieser zu den besten Ergebnissen führt und darüber hinaus am billigsten ist. Bezogen auf die erste Komponente beträgt der Weichmachergehalt üblicherweise 2 bis 25 Gew.% und vorzugsweise 7 bis 15 Gew.%.

Als Thixotropiemittel wird erfindungsgemäß vorzugsweise hydriertes Rizinusöl verwendet. Ein bevorzugtes hydriertes Rizinusöl besitzt einen Festpunkt von 80 bis 86 °C, ein spezifisches Gewicht von 0,9, eine OH-Zahl von ca. 160 und eine Jodzahl von weniger als 6. Ein derartiges Produkt ist unter der Bezeichnung « Rilanit » (Henkel) auf dem Markt. Wenngleich die Verwendung anderer Thixotropiemittel nicht ausgeschlossen ist, so hat sich hydriertes Rizinusöl in einer Menge von 0,5 bis 5 Gew.% und vorzugsweise 1 bis 3 Gew.% (bezogen auf erste Komponente) doch als besonders geeignet erweisen.

In diesem Zusammenhang sei erwähnt, daß erfindungsgemäße Dichtmassen, die sich als Vergußmassen eignen und dementsprechend kein Thixotropiemittel enthalten, vorteilhafterweise ein Antiabsetzmittel enthalten. Als geeignet hat sich beispielsweise « Sillitin Z 86 weiß » erwiesen, das eine aus 69 % Quarz und 31 % Kaolinit bestehende Kieselkreide ist.

Von besonderer Bedeutung ist die Auswahl des Härters, dessen Gewichtsanteil in der zweiten Komponente bei Vorhandensein üblicher Zusätze, wie Füllstoffen usw., vorzugsweise 5 bis 20 Gew.% und insbesondere 7 bis 15 Gew.% beträgt. Es wurde gefunden, daß wirklich gute Ergebnisse nur bei Verwendung von cycloaliphatischen Diaminen als Härter erzielt werden. Ein bevorzugtes cycloaliphatisches Diamin ist 3,3'-Dimethyl-4,4'-diaminodicyclohexylmethan der Formel

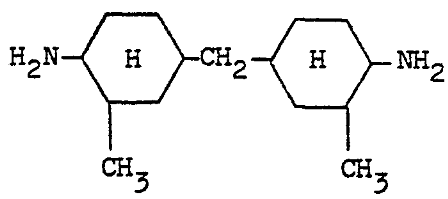

Ein weiteres geeignetes cycloaliphatisches Diamin ist N-Cyclohexylpropylendiamin der Formel

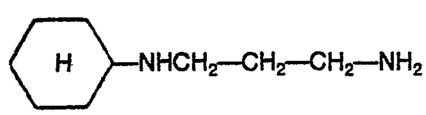

Die beiden genannten Verbindungen werden unter den Bezeichnungen « Laromin C 260 » (BASF) und « Laromin C 252 » (BASF) vertrieben.

Es ist möglich, auch mit bestimmten anderen Härtern, wie Härter L 2253 (Bayer), der auf einem latenten Ketimin aus Hexamethylendiamin und MIBK basiert, brauchbare Dichtmassen herzustellen. Der Einsatz dieser Härter anstelle der erfindungsgemäß zu verwendenden cycloaliphatischen Diamine führt jedoch dazu, daß die zweite Komponente nach kurzer Zeit an Reaktivität verliert, so daß sich das Härtungsverhalten und in der Folge auch die übrigen Eigenschaften der Dichtmassen verschlechtern, wenn die beiden Komponenten nicht umgehend verarbeitet, sondern, wie in der Praxis üblich und meist unumgänglich, einige Zeit gelagert werden.

Es hat sich als vorteilhaft erwiesen, dem Härter in der zweiten Komponente einen Beschleuniger zuzusetzen. Wenn die zweite Komponente neben dem Härter noch weitere übliche Bestandteile wie Füllstoffe enthält, beträgt der Gewichtsanteil des Beschleunigers in der zweiten Komponente vorzugsweise 1 bis 10 Gew.% und insbesondere 1,5 bis 5 Gew.% Besonders geeignet hierfür sind tertiäre Amine und/oder Amidinderivate, also Verbindungen ohne aktiven Wasserstoff. Ein auf dem Markt befindliches

Amidinderivat wird unter der Bezeichnung « Desmorapid L 2318 » (Bayer) in Form einer 65 %igen Lösung in Benzylalkohol vertrieben, die eine Viskosität von 1,7 bis 2,2 P (0,17-0,22 Pa.s) und ein spezifisches Gewicht von 1,06 besitzt. Der Flammpunkt nach DIN 51584 liegt bei 124 °C.

In vielen Fällen ist es weiterhin von Vorteil, der zweiten Komponente ein niedrigviskoses Polymercaptanharz wie « Capcure 3-800 » (Münzing Chemie, Heilbronn, Viskosität ca. 170 P (17 Pa.s), SH-Zahl 3,3, Dichte 1,15) in Mengen von etwa 5 bis 20 Gew.% (bezogen auf die zweite Komponente) zuzusetzen. Dieser Zusatz bietet zwei Vorteile. Er erhöht die mechanische Festigkeit der Gesamtmasse und macht sie in gehärtetem Zustand zäh-elastischer. Ferner bewirkt er in Vergußmassen (vergl. z. B. Patentanspruch 16) nach der Mischung der beiden Komponenten nach 2 bis 3 Minuten einen u. U. willkommenen Thixotropieaufbau, d. h. die Mischung fließt nicht mehr, so daß z. B. bei vergossenen Isolierglaseinheiten keine Gefahr des Abtropfens besteht. Dieser Effekt ist selbstverständlich auch in anderen Fällen des Einsatzes der erfindungsgemäßen Dichtstoffe häufig von Nutzen. Wichtig ist dabei, daß die erste Komponente der erfindungsgemäßen Dichtmassen einen Epoxidharzanteil enthält.

In bevorzugten Ausführungsformen der Erfindung enthalten die Dichtmassen zusätzlich Alterungsschutzmittel. Es wurde nämlich gefunden, daß sich die Glashaftung der Dichtmassen beispielsweise nach Bestrahlung mit UV-Licht manchmal verschlechtert. Dies kann durch die richtige Auswahl des Alterungsschutzmittels verhindert bzw. reduziert werden. Als besonders brauchbar für diesen Zweck haben sich sterisch gehinderte Aminderivate erwiesen, die als sogenannte Lichtschutzmittel im Handel erhältlich sind. Zu nennen ist hier insbesondere « Tinuvin 144 » (Ciba-Geigy) (Molekulargewicht 685, spezifisches Gewicht 1,07, Festpunkt gleich 146 bis 150 °C), das einen substituierten Malonsäureester mit zwei substituierten Piperidinringen darstellt.

Desgleich können auch Triazinderivate verwendet werden, wie 2,4-bis-(n-octylthio)-6-(4-hydroxy-3,5-di-tert.-butyl-anilino)-1,3,5-triazin (weißes kristallines Pulver, Schmelzbereich 93 bis 98 °C, MG 589), das folgende Formel besitzt:

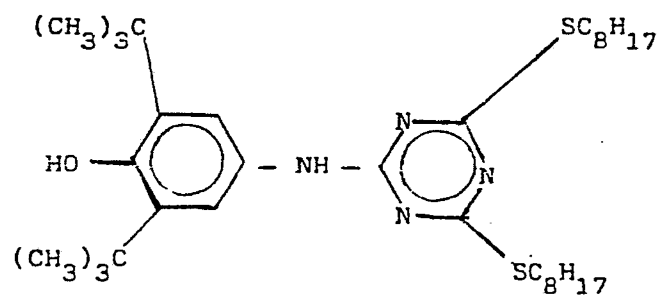

und im Handel unter der Bezeichnung « Irganox 565 » erhältlich ist. Brauchbar ist auch Pentaerythrityl-tetrakis [3-(3,5-di-tert.-butyl-4-hydroxyphenyl)-propionat] mit der Formel

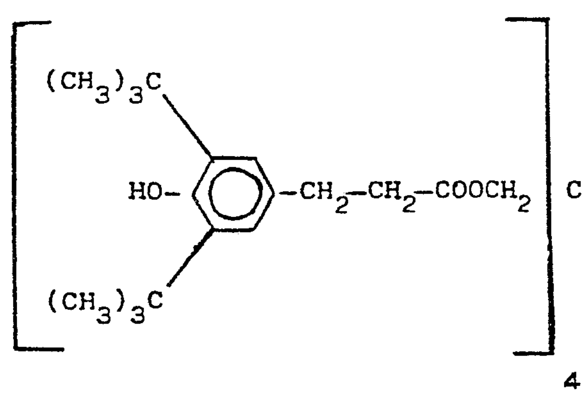

Diese Verbindung wird unter der Bezeichnung « Irganox 1010 » (Ciba-Geigy) als Antioxidans und Hitzestabilisator vertrieben.

Die erfindungsgemäßen Dichtmassen enthalten neben den oben aufgeführten Komponenten die üblichen Zusätze, wie beispielsweise Füllstoffe, Stabilisatoren, Pigmente usw., wobei insbesondere die Füllstoffe bis zu etwa 70 Gew.% der erfindungsgemäßen Dichtmassen ausmachen können. Geeignete Füllstoffe sind beispielsweise Kreide, Asbestfaser, Asbestpulver, Talkum, Silikate, $SiO_2$ und Schwerspatmehl ($BaSO_4$). Gießfähige Vergußmassen können außerdem ausnahmsweise geringe Mengen an organischen Lösungsmitteln wie Methylethylketon, Toluol, Xylol und ähnliche enthalten, um die Viskosität zu reduzieren und damit die Vergießbarkeit zu verbessern.

Bei der Erprobung der erfindungsgemäßen Dichtmassen hat sich ferner gezeigt, daß besonders vorteilhafte Produkte erhalten werden, wenn der Härter, das cycloaliphatische Diamin, in einer geringeren als der für eine vollständige Vernetzung stöchiometrisch erforderlichen Menge eingesetzt wird. Deshalb enthalten besonders bevorzugte Zweikomponenten-Dichtmassen gemäß der Erfindung nur 20 bis 80 % und vorzugsweise 30 bis 50 % der für eine vollständige Vernetzung stöchiometrisch erforderlichen Menge an Härter. Es sei in diesem Zusammenhang darauf hingewiesen, daß die als Beschleuniger zugesetzten tertiären Amine und Amidinderivate hier rechnerisch unberücksichtigt bleiben können, da sie, wie schon erwähnt, keinen aktiven Wasserstoff besitzen.

Im folgenden soll die Erfindung anhand von Beispielen näher erläutert werden. Wenn nicht anders vermerkt, beziehen sich alle Teilangaben auf Gewichtsteile.

Beispiel 1-2

| | Isolierglas | |
|---|---|---|
| Rohstoffe in Anteilen | 1 | 2 |
| Erste Komponente | | |
| Desmocap 11 | 110 | 150 |
| Desmocap 1280 | 100 | 100 |
| Epoxidharz (Bisphenol A-Basis) | - | 50 |
| Rilanitpaste (20:80 mit DIDP) | 90 | 100 |
| DIDP | 70 | 30 |
| Kreide | 253 | 158 |
| Schwerspat | 365 | 400 |
| GLYMO | 7 | 7 |
| Wasser | 5 | 5 |
| | 1000 | 1000 |
| Zweite Komponente | | |
| Laromin C 260 | 12 | 12 |
| Desmorapid L 23 18 | 2 | 6 |
| | 14 | 18 |
| Mischung: | | |
| 1. Komp. : 2. Komp. | 1000:14 | 1000:18 |
| Verarbeitungszeit nach DIN 52456 ca. | 20 Min. | 20 Min. |
| Klebfreiheit (manuell ermittelt) nach ca. | 2-3 h | 2-3 h |
| Shore A-Härte nach 4 h | ca. 15 | ca. 20 |
| Shore A-Härte nach 3 d | 45 | 45 |
| Zugfestigkeit an Glas/Glas-Prüfkörpern, $N/cm^2$ | 109 | 104 |
| Bruchdehnung, % | 75 | 175 |

Nach IG-Test:

| | | |
|---|---|---|
| Zugfestigkeit an Glas/Glas-Prüfkörpern, $N/cm^2$ | 52 | 60 |
| Bruchdehnung | 40 | 170 |
| Fog-Test, Normscheibe (nach kanadischer Spezifikation Can 2-12.8-M76) | kein Beschlag | nicht geprüft |
| WDD-Wert* (1,5 mm dicke Folie $g/m^2 \cdot d$ | 9,2 | 6,2 |
| spez. Gewicht ca. | 1,68 | 1,68 |

* WDD-Wert : Wasserdampfdiffusionswert.

IG-Test :

7 tägige Belastung der Prüfkörper, indem gleichzeitig mit UV-Licht bestrahlt und mit Wasser berieselt wird, wobei die 50 × 50 mm großen Glasscheiben mit einer 10 × 10 mm dicken Zwischenschicht (sandwichartig) verklebt sind und zur Hälfte in Wasser eintauchen. Auf diese Weise kann der Einfluß von UV-Strahlung und Feuchtigkeit gleichzeitig untersucht werden.

Beispiel 3

| Rohstoffe in Anteilen | Vergußmasse |
|---|---|
| Erste Komponente | |
| Desmocap 11 | 200 |
| DIDP | 130 |
| Schwerspat | 592 |
| Sillitin Z 86 weiß | 40 |
| GLYMO | 6 |
| Tinuvin 770 | 1 |
| Irganox 1010 | 1 |
| MEK | 30 |
| | 1000 |

| | Vergußmasse |
|---|---|
| 2. Komponente | |
| Laromin C 260 | 9,6 |
| Desmorapid L 23 18 | 3,8 |
| DIDP | 6,0 |
| Ruß | 0,6 |
| | 20,0 |

Mischung

| 1. Komp. : 2. Komp. | 1000:20 |
|---|---|
| Verarbeitungszeit nach DIN 52456 ca. | 20 Min. |
| Klebfreiheit (manuell ermittelt) nach ca. | 1 h |
| Shore A-Härte nach 4 h | ca. 30 |
| Shore A-Härte nach 3 d | 50 |
| Spez. Gewicht ca. | 1,75 |

Beispiel 4 und 5

Dichtmassen für Isolierglas

1. Komponente

| Rohstoffe | 4<br>Anteile | 5<br>Anteile |
|---|---|---|
| Desmocap 11 | 110 | 130 |
| Desmocap 1280 | 100 | 120 |
| Beckopox 37139 | - | 50 |
| Paste:Rilanit/DIDP (20:80) | 90 | 100 |
| DIDP | 71 | 20 |
| Kreide | 250 | 171 |
| Schwerspatmehl | 370 | 400 |
| GLYMO | 6 | 6 |
| Tinuvin 144 | 1 | 3 |
| Tinuvin 770 | 1 | - |
| Irganox 565 | 1 | - |
| | 1000 | 1000 |

2. Komponente

| Rohstoffe | Anteile | Anteile |
|---|---|---|
| Laromin C 260 | 110 | 110 |
| Desmorapid L 2318 | 30 | 30 |
| Kreide | 650 | 650 |
| DIDP | 170 | 170 |
| Eisenoxidschwarz | 40 | 40 |
| | 1000 | 1000 |

| Mischungsverhältnis | 4 | 5 |
|---|---|---|
| 1. Komp. : 2. Komp. | 10 : 1 | 10 : 1 |
| Verarbeitungszeit | 30 Min. | 30 Min. |
| Härtungsverhalten | sehr gut | sehr gut |
| Shore A-Härte (14 d) | 46 | 39 |
| Haftungs Glas (Raupen) | sehr gut | sehr gut |
| Haftung Alu (Raupen) | sehr gut | sehr gut |
| Standfestigkeit (DIN-Profil) | ja | ja |
| Lagerstabilität | ja | ja |
| Fog-Verhalten | gut | gut |

Beispiel 6

Dichtmasse für Bauzwecke

1. Komponente

| Rohstoffe | Anteile |
|---|---|
| Desmocap 11 | 90 |
| Desmocap 1280 | 90 |
| Beckopox 37139 | 80 |
| Paste Rilanit/DIDP (20:80) | 130 |
| DIDP | 120 |
| Kreide | 420 |
| Titandioxid | 50 |
| Aerosil 200 | 12 |
| GLYMO | 6 |
| Tinuvin 144 | 2 |
| | 1000 |

2. Komponente

| Rohstoffe | Anteile |
|---|---|
| DIDP | 17,0 |
| Kreide | 70,0 |
| Laromin C 260 | 10,0 |
| Desmorapid L 2318 | 3,0 |
| | 100,0 |

| Mischungsverhältnis | |
|---|---|
| 1. Komp. : 2. Komp. | 10 : 1 |
| Verarbeitungszeit | 60 - 90 Min. |
| Härtungsverhalten | sehr gut |
| Shore A-Härte 18h / 2d / 5d | 9 / 14 / 17 |
| Haftung Glas (Raupen) | sehr gut |
| Haftung Alu (Raupen) | sehr gut |
| Standfestigkeit (DIN-Profil) | sehr gut |
| Lagerstabilität | sehr gut |
| Haftung (Beton + Primer*)) | sehr gut |

*) Primer: Voranstrich aus einer Lösung von Chlorkautschuk in einem Aromatengemisch

Beispiel 7

Vergußmasse

1. Komponente

| Rohstoffe | Anteile |
|---|---|
| Desmocap 11 | 200 |
| DIDP | 130 |
| Schwerspatmehl | 400 |
| Kreide | 200 |
| GLYMO | 7 |
| MEK | 11 |
| Tinuvin 144 | 2 |
| Asbestmehl | 50 |
| | 1000 |

2. Komponente

| Rohstoffe | Anteile |
|---|---|
| Laromin C 260 | 100 |
| Desmorapid L 2318 | 30 |
| Eisenoxidschwarz | 30 |
| DIDP | 240 |
| Schwerspatmehl | 300 |
| Kreide | 300 |
| | 1000 |

Mischungsverhältnis

| 1. Komp. : 2. Komp. | 10 : 1 |
|---|---|
| Verarbeitungszeit | ca. 30 Min. |
| Härtungsverhalten | sehr gut |
| Shore A-Härte | 56 |
| Haftung Glas (Raupen) | sehr gut |
| Haftung Alu (Raupen) | sehr gut |
| Gießbarkeit | gut |
| Lagerstabilität | sehr gut |
| Fog-Verhalten | hier nicht wichtig |

Vergleichsbeispiel A

1. Komponente

| Rohstoffe | Anteile |
|---|---|
| Desmophen 1652 | 133,3 |
| Cereclor S 52 | 216,7 |
| Rizinusöl | 66,7 |
| Desmorapid DB | 1,3 |
| MS 510 | 16,7 |
| Kreide | 550,0 |
| Titanoxid | 14;6 |
| Eisenoxidschwarz | 0,7 |
| GLYMO | 8,3 |
| | 1008,3 |

2. Komponente

| Rohstoffe | Anteile |
|---|---|
| Desmodur VK | 45 |
| BBP | 55 |
| | 100 |

| Mischungsverhältnis | |
|---|---|
| 1. Komp. : 2. Komp. | 10008,3/100 |
| Härtungsverhalten | sehr gut |
| Shore A-Härte, 3 d | 35 |
| Haftung Glas (Raupen) | gut |
| Haftung Alu (Raupen) | schlecht |
| Standfestigkeit (DIN-Profil) | gießbar |
| Lagerstabilität | schlecht |
| Fog-Verhalten | schlecht |

## Vergleichsbeispiel B

| 1. Komponente | B 1 | B 2 | B 3 |
|---|---|---|---|
| Rohstoffe | Anteile | | |
| Desmocap 11 | 90 | 90 | 90 |
| Desmocap 1280 | 120 | 120 | 120 |
| Paste:Thixseal 1084 / DIDP (20 : 80) | 120 | 120 | 120 |
| DIDP | 50 | 50 | 50 |
| $TiO_2$ A | 20 | 20 | 20 |
| Kreide | 570 | 570 | 570 |
| Vulkanox AFC | 5 | 5 | 5 |
| MEK | 18 | 18 | 18 |
| GLYMO | 8 | - | - |
| MTMO | - | 8 | - |
| Z 6026 | - | - | 8 |
| | 1005 | 1005 | 1005 |

| 2. Komponente | |
|---|---|
| Rohstoffe | Anteile |
| Härter L 2253 | 12 |
| Paste:Thixseal 1084 / DIDP (20 : 80) | 15 |
| Kreide | 60 |
| Schwarzpaste | 10 |
| Dest. $H_2O$ | 1 |
| PEI 3 | 2 |
| | 100 |

Mischungsverhältnis

| 1. Komp. : 2. Komp. | 1005/100 | 1005/100 | 1005/100 |
|---|---|---|---|
| Verarbeitungszeit | 5 Min. | 30 Min. | 30 Min. |
| Shore A-Härte (20h / 2d / 45d) | 17/27/42 | 8/18/36 | 10/19/33 |
| Haftung Glas (Raupen) | gering | gut | gut |
| Haftung Alu (Raupen) | schlecht | schlecht | schlecht |
| Standfestigkeit (DIN-Profil) | sehr gut | sehr gut | gering |
| Lagerstabilität | verlieren an Reaktivität | | |

Vergleichsbeispiel C

1. Komponente

| Rohstoffe | Anteile |
|---|---|
| Desmocap 11 | 90 |
| Desmocap 1280 | 120 |
| $TiO_2$ | 30 |
| Vulkanox KSM | 5 |
| Kreide | 538 |
| Dest. $H_2O$ | 2 |
| Paste:Thixseal 1084 / DIDP (20 : 80) | 180 |
| Aerosil 130 | 10 |
| MEK | 20 |
| GLYMO | 5 |
| | 1000 |

2. Komponente

| Rohstoffe | Anteile |
|---|---|
| DIDP | 10 |
| Schwarzpaste | 1 |
| Aerosil 130 | 1 |
| Härter . K L5 - 2350 | 14 |
| Kreide | 79 |
| TEP | 3 |
| PEI 3 | 2 |
| | 110 |

Mischungsverhältnis

| 1. Komp. : 2. Komp. | 1000 / 110 |
|---|---|
| Verarbeitungszeit | 5 Min. |
| Shore A-Härte (3d / 13d / 60d) | 30, 40/44 |
| Haftung Glas (Raupen) | ja gut |
| Haftung Alu (Raupen) | mittel-gut |
| Standfestigkeit (DIN-Profil) | gut |
| Fog-Verhalten | vergilbt stark |

Vergleichsbeispiel D

| 1. Komponente | D 1 | D 2 |
|---|---|---|
| Rohstoffe | Anteile | |
| Desmocap 11 | 45 | 45 |
| Beckopox 37139 | 9 | 9 |
| Disflammoll TOF | 11 | 11 |
| Sillitin Z 86 weiß | 20 | 20 |
| Schwerspatmehl | 14 | 14 |
| Schwarzpaste | 1 | 1 |
| | 100 | 100 |

| 2. Komponente | D 1 | D 2 |
|---|---|---|
| Rohstoffe | Anteile | |
| Laromin C 260 | 6,0 | 6,0 |
| DMP 30 | 3,0 | 3,0 |
| Desmorapid L 2318 | 0,2 | 0,2 |
| DAMO | 0,8 | - |
| GLYMO | - | 0,8 |
| | 10,0 | 10,0 |

| Mischungsverhältnis | | | |
|---|---|---|---|
| 1. Komp. : 2. Komp. | | 100/11 | 100/11 |
| Verarbeitungszeit | | | |
| Härtungsverhalten | 16 h | sehr gut | sehr gut |
| Shore A-Härte | | - | - |
| Haftung Glas (Raupen) | | schlecht | schlecht |
| Haftung Alu (Raupen) | | schlecht | schlecht |
| Lagerstabilität | | gut | gut |
| Fog-Verhalten | | schlecht | schlecht |

In den Beispielen 1 bis 6 sowie den Vergleichsbeispielen A bis D stehen die verwendeten Abkürzungen und Handelsbezeichnungen für folgende Materialien:

Desmocap 11: verzweigtes Polymer mit Ether- und Urethangruppen sowie vernetzungsfähigen, blockierten NCO-Gruppen (siehe Beschreibung)
Desmocap 1280: 80 % lineares Polymer mit Ether- und Urethangruppen sowie vernetzungsfähigen, blockierten NCO-Gruppen (siehe Beschreibung) und 20 % Trioctylphosphat
Epoxidharz: Reaktionsprodukt von Epichlorhydrin und Diphenylolpropan (siehe Beschreibung)
Rilanit: Thixotropiemittel; hydriertes Rizinusöl (siehe Beschreibung)
DIDP: Weichmacher; Diisodecylphthalat:
Sillitin Z 86 weiß: Thixotroper Füllstoff, Kieselkreide aus 69 % Quarz und 31 % Kaolinit; 82,5 % $SiO_2$, 12 % $Al_2O_3$; spezifisches Gewicht 2,6
GLYMO: Haftvermittler; γ-Glycidoxypropyl-trimethoxysilan (siehe Beschreibung)
Tinuvin 144: Lichtschutzmittel, sterisch gehindertes Aminderivat aus einem substituierten Malonsäureester mit zwei substituierten Piperidinringen
Tinuvin 770: Lichtschutzmittel, sterisch gehindertes Aminderivat (siehe Beschreibung)
Irganox 565: 2,5-bis-(n-Octylthio)-6-(4-hydroxy-3,5-ditert.-butylanilino)-1,3,5-triazin (siehe Beschreibung)
Organox 1010: Antioxidans und Hitzestabilisator; Pentaerythrityl-tetrakis-[3-(3,5-di-tert.-butyl-4-hydroxy-phenyl)-propionat] (siehe Beschreibung)
MEK: Methylethylketon
Laromin C 260: 3,3'-Dimethyl-4,4'-diaminodicyclohexylmethan (siehe Beschreibung)
Desmorapid L 2318 Bayer: Beschleuniger; Aminderivat ohne aktiven H; 65 %ig in Benzylalkohol; Viskosität 1,7 bis 2,2 P (0,17-0,22 Pa.s.); spezifisches Gewicht 1,06; Flammpunkt 124 °C
Beckopox 37139: Epoxidharz auf Basis von Bisphenol A und Epichlorhydrin (siehe Beschreibung)
Aerosil 130: pyrogenes $SiO_2$, BET-Oberfläche ca. 130 $m^2/g$
Aerosil 200: pyrogenes $SiO_2$, BET-Oberfläche ca. 200 $m^2/g$
Vulkanox AFC: Alterungsschutzmittel, Benzofuranderivat
Vulkanox KSM: Alterungsschutzmittel, Gemisch aralkylierter Phenole
Härter L 2253: latentes Ketimin (siehe Beschreibung)
PEI 3: Polyethylenimin
Thixseal 1084: hydriertes Rizinusöl + Montmorillonit
$TiO_2A$: $TiO_2$ Anatas
MTMO: γ-Mercaptopropyl-trimethoxysilan
Z 6026: Aminosilan
Schwarzpaste: 50 % BBP, 50 % $Fe_2O_3/FeO(OH)$
Härter KL5 — 2350: latentes Oxazolidin
TEP: Tetraethylenpentamin
Disflammol TOF: Trioctyl (= 2-ethyl (hexyl))-phosphat
DAMO: N-ß(aminoethyl)-γ-aminopropyl-trimethoxysilan (siehe Beschreibung)
Desmophen 1652: lineares Polyester-01, 1,7 %OH
Cereclor S 52: Chlorparaffin, 52 % Cl
MS 570: Ca-Al-Silikat, 4 Å Molekularsieb
Desmorapid DB: org. Pb-salz
Desmodur VK: MDI
BBP: Benzylbutylphthalat
DMP 30: Tri(dimethylaminomethyl-phenol)

PS : reaktive flüssige Polysulfidpolymere
MIBK : Methylisobutylketon
Fogtest (Fogverhalten) : Kondensatbildung auf der Innenseite einer Isolierglaseinheit

Wie die Beispiele 1 bis 6 zeigen, besitzen Dichtmassen mit der erfindungsgemäßen Zusammensetzung ausgezeichnete Eigenschaften im Hinblick auf die Glas- und Aluminium-haftung sowie das Härtungsverhalten. Aber auch die je nach Verwendungszweck weiterhin erforderlichen Eigenschaften sind bei den erfindungsgemäßen Dichtmassen in besonders gut ausgeprägter Weise vorhanden. Demgegenüber zeigen die Vergleichsbeispiele, daß schon geringfügige Abweichungen von der erfindungsgemäßen Zusammensetzung zu deutlich schlechteren Ergebnissen führen. Wie schon in der Beschreibung erläutert, kann man auch bei Verwendung bestimmter anderer Härter, wie z. B. dem im Vergleichsbeispiel B, brauchbare Produkte erhalten. Wie das Vergleichsbeispiel B (entsprechendes gilt auch für Vergleichsbeispiel C) jedoch zeigt, sind diese Zusammensetzungen nur vorübergehend brauchbar, da sie beim Lagern deutlich an Reaktivität verlieren. Noch deutlicher sind die Unterschiede zwischen den erfindungsgemäßen Dichtmassen und in ähnlicher Weise hergestellten Dichtmassen gemäß den Vergleichsbeispielen A und D.

**Ansprüche**

1. Zweikomponenten-Polyurethan-Dichtmassen, die vernetzungsfähige Polyurethanpolymere, Härter, Haftvermittler und Weichmacher sowie übliche Zusätze enthalten, dadurch gekennzeichnet, daß die erste Komponente
a) 10 bis 50 Gew.% lineare und/oder verzweigte Polymere mit Ether- und Urethangruppen sowie vernetzungsfähigen, blockierten Isocyanatgruppen,
b) 0-15 Gew.% Epoxidharz,
c) 0,1 bis 2,5 Gew.% Trialkoxysilan,
d) 2 bis 25 Gew.% Weichmacher
und gegebenenfalls
e) 0,5 bis 5 Gew.% Thixotropiemittel enthält, und die zweite Komponente
f) cycloaliphatische Diamine, vorzugsweise in einer Menge von 5 bis 20 Gew.%, als Härter und
g) tertiäre Amine und/oder Amidinderivate, vorzugsweise in einer Menge von 1 bis 10 Gew.%, als Beschleuniger enthält
und daß das Gewichtsverhältnis von erster zu zweiter Komponente 2 : 1 bis 100 : 1 beträgt, wobei das Gewichtsverhältnis von a) + b) zu f) zwischen 10 : 1 und 40 : 1 liegt.
2. Dichtmassen nach Anspruch 1, dadurch gekennzeichnet, daß c) in der ersten Komponente γ-Glycidoxypropyltrimethoxysilan mit der Formel

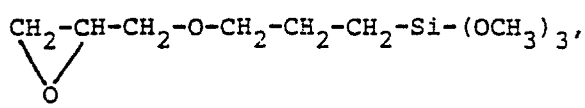

N-β (aminoethyl)-γ-aminopropyl-trimethoxysilan mit der Formel

$$H_2N—CH_2—CH_2—NH—CH_2—CH_2—CH_2—Si—(OCH_3)_3,$$

N-(β-ethylänädiaminoethyl)-γ-aminopropyl-trimethoxysilan mit der Formel

$$H_2N—(CH_2)_2—NH—(CH_2)_2—NH—(CH_2)_3—Si—(OCH_3)_3,$$

γ-Aminopropyl-trimethoxysilan mit der Formel

$$H_2N—CH_2—CH_2—CH_2—Si—(OCH_3)_3,$$

N-methyl-γ-aminopropyl-trimethoxysilan mit der Formel

$$CH_3—NH—CH_2—CH_2—CH_2—Si—(OCH_3)_3,$$

Vinyltrimethoxysilan mit der Formel

$$CH_2 = CH—Si—(OCH_3)_3$$

oder eine Mischung dieser Silane ist.
3. Dichtmassen nach Anspruch 1 bis 2, dadurch gekennzeichnet, daß d) in der ersten Komponente Diisodecylphthalat ist.

4. Dichtmassen nach Anspruch 1 bis 3, dadurch gekennzeichnet, daß e) in der ersten Komponente hydriertes Rizinusöl ist.

5. Dichtmassen nach Anspruch 1 bis 4, dadurch gekennzeichnet, daß f) in der zweiten Komponente 3,3'-Dimethyl-4,4'-diaminodicyclohexylmethan der Formel

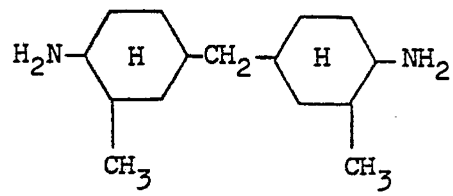

ist.

6. Dichtmassen nach Anspruch 1 bis 5, dadurch gekennzeichnet, daß g) in der zweiten Komponente 2,3-N-Dimethyltetrahydro-$^1\Delta$-pyrimidin mit der Formel

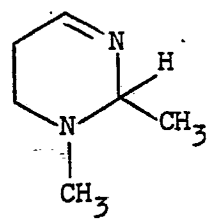

ist.

7. Dichtmassen nach Anspruch 1 bis 6, dadurch gekennzeichnet, daß die zweite Komponente den gleichen Weichmacher wie die erste Komponente in einer Menge von 10 bis 30 Gew.% enthält.

8. Dichtmassen nach Anspruch 1 bis 7, dadurch gekennzeichnet, daß sie Alterungsschutzmittel enthalten.

9. Dichtmassen nach Anspruch 8, dadurch gekennzeichnet, daß das Alterungsschutzmittel ein Triazin-derivat wie 2,4-bis-(n-Octylthio)-6-(4-hydroxy-3,5-di-tert.-butylanilino)-1,3,5-triazin, Pentaerythrithyl-tetrakis-[3-(3,5-di-tert.-butyl-4-hydroxyphenyl)-propionat] und/oder ein sterisch gehindertes Aminderivat wie das mit der folgenden Formel

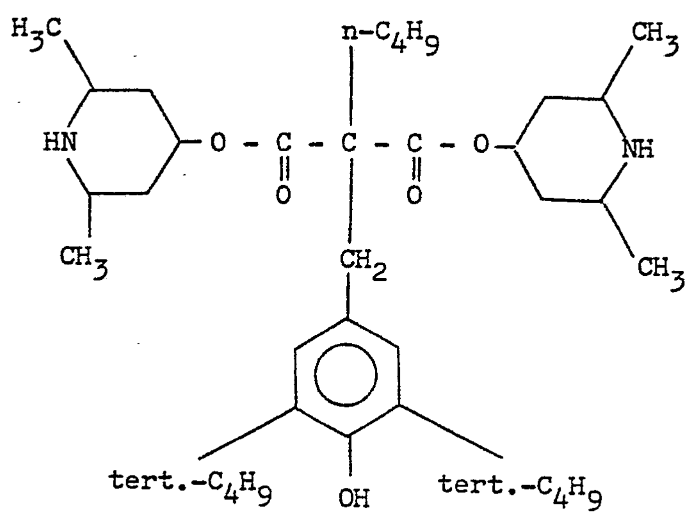

ist.

10. Dichtmassen nach Anspruch 1 bis 9, dadurch gekennzeichnet, daß die erste Komponente b) in einer Menge von 2 bis 10 Gew.% und insbesondere 3 bis 8 Gew.% enthält.

11. Dichtmassen nach Anspruch 1 bis 10, dadurch gekennzeichnet, daß das Epoxidharz ein flüssiges Epoxidharz ist, das ein Reaktionsprodukt von Epichlorhydrin und Diphenylolpropan ist oder einen aliphatischen Polyglycidylether darstellt.

12. Dichtmassen nach Anspruch 1 bis 11, dadurch gekennzeichnet, daß die zweite Komponente weniger als die für eine vollständige Vernetzung stöchiometrisch erforderlichen Menge an Härter enthält.

13. Dichtmassen nach Anspruch 12, dadurch gekennzeichnet, daß die zweite Komponente 20 bis 80 % und vorzugsweise 30 bis 50 % der für eine vollständige Vernetzung stöchiometrisch erforderliche Menge an Härter enthält.

14. Dichtmassen nach Anspruch 1 bis 13, dadurch gekennzeichnet, daß die zweite Komponente zusätzlich ein niedrigviskoses Polymercaptanharz in einer Menge von 5 bis 20 Gew.% enthält.

15. Verwendung der Dichtmassen gemäß Anspruch 1 bis 14 als Dichtstoffe für Isolierglas.

16. Verwendung von Dichtmassen gemäß Anspruch 1 bis 14 als Vergußmasse zum Vergießen von Isolierglaseinheiten in Rahmen, insbesondere Aluminiumrahmen.

17. Verwendung von Dichtmassen gemäß Anspruch 1 bis 14 als Dichtungsmassen für Verfugungsarbeiten in der Bauindustrie.

**Claims**

1. Two-component polyurethane sealant compositions containing cross-linkable polyurethane polymers, hardeners, adhesion promotors and plasticizers as well as usual additives, characterized in that the first component contains

a) 10 to 50 % by weight of linear and/or branched polymers with ether and urethane groups as well as cross-linkable, blocked isocyanate groups,

b) 0 to 15 % by weight of epoxy resin,

c) 0.1 to 2.5% by weight trialkoxysilane,

d) 2 to 25 % by weight plasticizer

and optionally

e) 0.5 to 5 % by weight of a thixotropic agent and the second component contains

f) cycloaliphatic diamines, preferably in an amount of 5 to 20 % by weight as hardener and

g) tertiary amines and/or amidin derivatives, preferably in an amount of 1 to 10 % by weight as accelerator

and that the weight ratio of the first component to the second component is 2 : 1 to 100 : 1, the weight ratio of a) + b) to f) being between 10 : 1 and 40 : 1.

2. Sealant compositions according to claim 1, characterized in that c) in the first component is γ-glycidoxypropyl trimethoxysilane having the formula

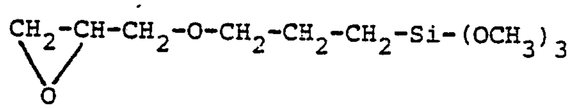

N-β-(aminoethyl)-γ-aminopropyl-trimethoxysilane having the formula

$$H_2N—CH_2—CH_2—NH—CH_2—CH_2—CH_2—Si—(OCH_3)_3,$$

N-(β-ethylaenaediaminoethyl)-γ-aminopropyl-trimethoxysilane having the formula

$$H_2N—(CH_2)_2—NH—(CH_2)_2—NH—(CH_2)_3—Si—(OCH_3)_3,$$

γ-aminopropyl-trimethoxysilane having the formula

$$H_2N—CH_2—CH_2—CH_2—Si—(OCH_3)_3'$$

N-methyl-γ-aminopropyl-trimethoxysilane having the formula

$$CH_3—NH—CH_2—CH_2—CH_2—Si—(OCH_3)_3,$$

Vinyltrimethoxysilane having the formula

$$CH_2 = CH—Si—(OCH_3)_3$$

or a mixture of these silanes.

3. Sealant compositions according to claims 1 to 2, characterized in that d) in the first component is diisodecylphthalate.

4. Sealant compositions according to claims 1 to 3, characterized in that e) in the first component is hydrogenated castor oil.

5. Sealant compositions according to claims 1 to 4, characterized in that f) in the second component is 3,3'-dimethyl-4,4'-diaminodicyclohexylmethane having the formula

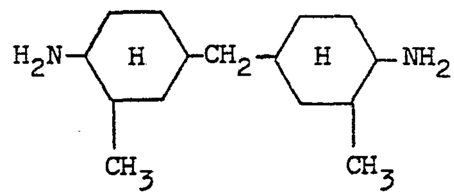

6. Sealant compositions according to claims 1 to 5, characterized in that g) in the second component is 2,3-N-dimethyltetrahydro-$^1\Delta$-pyrimidine having the formula

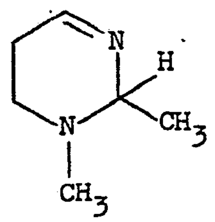

7. Sealant compositions according to claims 1 to 6, characterized in that the second component contains the same plasticizer as the first component in an amount of 10 to 30 % by weight.

8. Sealant compositions according to claims 1 to 7, characterized in that they contain anti-agers.

9. Sealant compositions according to claim 8, characterized in that the anti-ager is a triazine derivative such as 2,4-bis-(n-octylthio)-6-(4-hydroxy-3,5-di-tert.-butylanilino)-1,3,5-triazine, pentaerythritol-tetrakis-[3-(3,5-di-tert.-butyl-4-hydroxyphenyl)-propionate] and/or a sterically hindered amine derivative as the one having the following formula

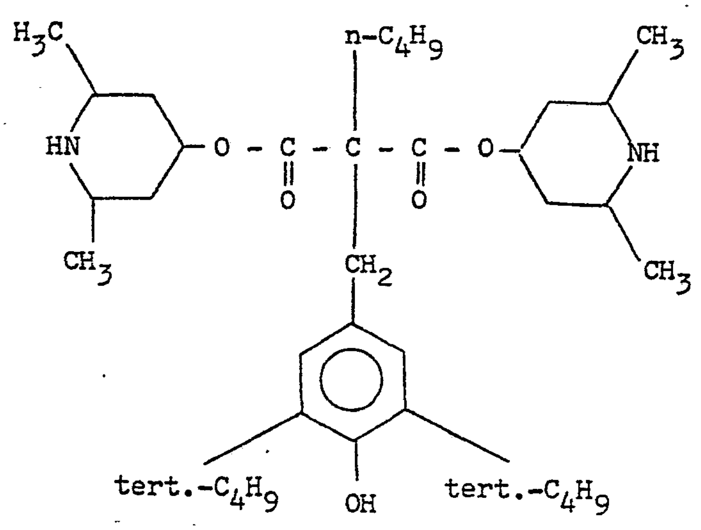

10. Sealant compositions according to claims 1 to 9, characterized in that the first component contains b) in an amount of 2 to 10 % by weight and in particular 3 to 8 % by weight.

11. Sealant compositions according to claims 1 to 10, characterized in that the epoxy resin is a liquid epoxy resin in the form of a reaction product of epichlorohydrin and diphenylol propane or an aliphatic polyglycidyl ether.

12. Sealant compositions according to claims 1 to 11, characterized in that the second component contains less hardener than is stoichiometrically necessary for a complete cross-linking.

13. Sealant compositions according to claim 12, characterized in that the second component contains 20 to 80 % and preferably 30 to 50 % of the hardener quantity stoichiometrically necessary for complete cross-linking.

14. Sealant compositions according to claims 1 to 13, characterized in that the second component contains additionally a polymercaptan resin having a low viscosity in an amount of 5 to 20 % by weight.

15. Use of the sealant compositions according to claims 1 to 14 as sealants for insulating glass.

16. Use of the sealant compositions according to claims 1 to 14 as a casting compound for casting insulating glass units in frames, particularly aluminum frames.

17. Use of the sealant compositions according to claims 1 to 14 as sealing compounds for jointing work in the building industry.

**Revendications**

1. Mastics à deux composants à base de polyuréthanne, comprenant des polymères de polyuréthanne, des agents de durcissement, des agents d'accrochage et des plastifiants, ainsi que des additifs usuels, caractérisés en ce que le premier composant contient

a) 10 à 50 % en poids de polymères linéaires et (ou) ramifiés avec des groupes éther et uréthanne, ainsi que des groupes isocyanate réticulables bloqués,

b) 0 à 15 % en poids de résine époxyde,

c) 0,1 à 2,5 % en poids d'un trialcoxy-silane,

d) 2 à 25 % en poids d'un plastifiant et éventuellement

e) 0,5 à 5 % en poids d'un adjuvant de thixotropie, et le deuxième composant

f) des diamines cyclo-aliphatiques en tant qu'agents de durcissement, de préférence en une proportion de 5 à 20 % en poids et

g) des amines tertiaires et (ou) des dérivés d'amidine en tant qu'accélérateurs du durcissement, de préférence en une proportion de 1 à 10 % en poids, les proportions pondérales du premier composant et du deuxième composant étant dans un rapport compris entre 2 : 1 et 100 : 1 et celles de a) + b) et de f) dans un rapport compris entre 10 : 1 et 40 : 1.

2. Mastics suivant la revendication 1, caractérisés en ce que le dérivé silanique c) du premier composant est choisi parmi

le γ-glycidoxypropyl-triméthoxy-silane de la formule

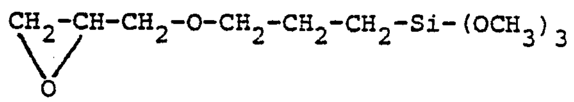

le N-β-(amino-éthyl)-γ-amino-propyl-triméthoxy-silane de la formule

$$H_2N—CH_2—CH_2—NH—CH_2—CH_2—CH_2—Si—(OCH_3)_3,$$

le N-(β-éthyl-énédiamino-éthyl)-γ-amino-propyltriméthoxy-silane de la formule

$$H_2N—(CH_2)_2—NH—(CH_2)_2—NH—(CH_2)_3—Si—(OCH_3)_3,$$

le γ-amino-propyl-triméthoxy-silane de la formule

$$H_2N—CH_2—CH_2—CH_2—Si—(OCH_3)_3,$$

le N-méthyl-γ-amino-propyl-triméthoxy-silane de la formule

$$CH_3—NH—CH_2—CH_2—CH_2—Si(OCH_3)_3,$$

le vinyl-triméthoxy-silane de la formule

$$CH_2 = CH—Si—(OCH_3)_3$$

et les mélanges de ces silanes.

3. Mastics suivant les revendications 1 et 2, caractérisés en ce que le plastifiant d) du premier composant est du diisodécyl-phtalate.

4. Mastics suivant les revendications 1 à 3, caractérisés en ce que l'additif e) du premier composant est de l'huile de ricin hydrogénée.

5. Mastics suivant les revendications 1 à 4, caractérisés en ce que l'agent de durcissement f) dans le deuxième composant est le diméthyl-3,3' diamino-4,4' dicyclohexyl-méthane de la formule

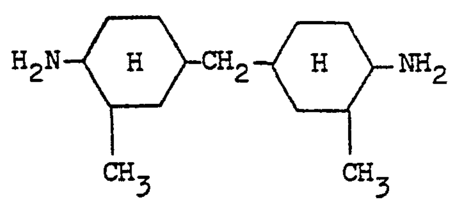

6. Mastics suivant les revendications 1 à 5, caractérisés en ce que l'accélérateur g) dans le deuxième composant est la N-méthyl-3 méthyl-2 tétrahydro-¹Δ-pyrimidine de la formule

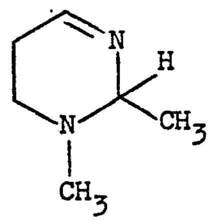

7. Mastics suivant les revendications 1 à 6, caractérisés en ce que le plastifiant du deuxième composant est le même que celui du premier composant, sa proportion étant comprise entre 10 et 30 % en poids.

8. Mastics suivant les revendications 1 à 7, caractérisés en ce qu'ils contiennent en outre un agent anti-vieillissement.

9. Mastics suivant la revendication 8, caractérisés en ce que l'agent anti-vieillissement est un dérivé de la triazine tel que la 2,4-bis-(n-octyl-thio) 6-(hydroxy-4 di-tert.-butyl-3,5 anilino) 1,3,5-triazine, le pentaérythrityl tétrakis-[3-(di-tert.-butyl-3,5 hydroxy-4 phényl) propionate] et (ou) un dérivé d'amine à empêchement stérique tel que celui de la formule

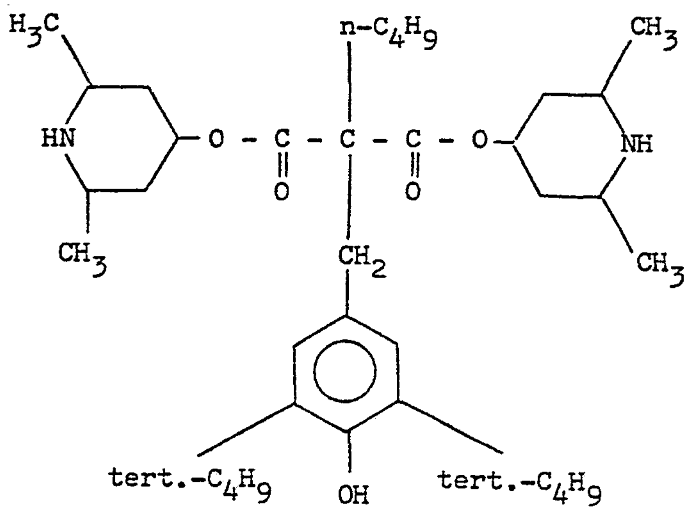

10. Mastics suivant les revendications 1 à 9, caractérisés en ce que la proportion de la résine époxyde b) dans le premier composant est comprise entre 2 et 10 % et surtout entre 3 et 8 % en poids.

11. Mastics suivant les revendications 1 à 10, caractérisés en ce que la résine époxyde est une résine époxyde liquide obtenue comme produit de la réaction de l'épichlorhydrine et du diphénylol-propane ou étant un éther de polyglycidyle.

12. Mastics suivant les revendications 1 à 11, caractérisés en ce que le deuxième composant contient l'agent de durcissement en une proportion inférieure à la proportion stœchiométrique nécessaire pour une réticulation complète.

13. Mastics suivant la revendication 12, caractérisés en ce que le deuxième composant contient l'agent de durcissement en une proportion comprise entre 20 et 80 et de préférence entre 30 et 50 % de la proportion stœchiométrique nécessaire pour une réticulation complète.

14. Mastics suivant les revendications 1 à 13, caractérisés en ce que le deuxième composant contient en outre une résine de polymercaptan à faible viscosité en une proportion de 5 à 20 % en poids.

15. Utilisation de mastics suivant les revendications 1 à 14 comme matières lutantes pour vitrages isolants.

16. Utilisation de mastics suivant les revendications 1 à 14 comme masses de scellement de vitrages isolants dans des châssis, en particulier des châssis en aluminium.

17. Utilisation de mastics suivant les revendications 1 à 14 comme matières de jointoiement dans l'industrie du bâtiment.